# EUROPEAN PATENT SPECIFICATION

(11) **EP 3 238 203 B1**
(45) Date of publication and mention of the grant of the patent: **31.03.2021**
(21) Application number: 15873549.8
(22) Date of filing: 17.12.2015
(51) Int. Cl.: G06F 1/16, G02B 27/00

(54) **WINDOW COVER AND DISPLAY APPARATUS HAVING THE SAME AND METHOD OF MANUFACTURING DISPLAY APPARATUS**
FENSTERABDECKUNG UND ANZEIGEVORRICHTUNG DAMIT UND VERFAHREN ZUR HERSTELLUNG EINER ANZEIGEVORRICHTUNG
COUVERTURE DE FENÊTRE ET APPAREIL D'AFFICHAGE AYANT CELLE-CI ET PROCÉDÉ DE FABRICATION D'UN APPAREIL D'AFFICHAGE

(30) Priority: 26.12.2014 KR 20140190898
(43) Date of publication of application: 01.11.2017
(73) Proprietor: Samsung Electronics Co., Ltd., Gyeonggi-do 16677 (KR)
(72) Inventor: PARK, Byung Ha, Suwon-si, Gyeonggi-do 16690 (KR); KIM, Nak Hyun, Suwon-si, Gyeonggi-do 16527 (KR); CHO, Yong Suk, Suwon-si, Gyeonggi-do 16679 (KR); HAM, Cheol, Yongin-si, Gyeonggi-do 17003 (KR)
(74) Representative: Gulde & Partner
(86) International application number: PCT/KR2015/013870
(87) International publication number: WO 2016/105022

(56) References cited:
- WO-A1-2013/108957
- CN-A- 102 736 136
- KR-A- 20130 084 022
- US-A1- 2013 130 002
- US-A1- 2014 065 326
- US-A1- 2014 078 585
- US-A1- 2014 340 831
- US-A1- 2014 353 874

## Description

### [Technical Field]

The present invention relates to a window cover and a display apparatus having the same and a method of manufacturing the display apparatus, and more particularly, to a window cover having an improved structure to simultaneously satisfy flexibility and durability and a display apparatus having the same and a method of manufacturing the display apparatus.

### [Background Art]

A display apparatus is an apparatus which displays visual and three-dimensional image information and includes a liquid crystal display (LCD) device, an electroluminescence display (ELD) device, a field emission display (FED) device, a plasma display panel (PDP), a thin film transistor liquid crystal display (TFT-LCD), and the like.

The display apparatuses have been used in various electronic devices such as a television, a computer monitor, a laptop, a portable terminal, a display unit of a refrigerator, a display unit of a camera, and the like.

The above display apparatuses perform user interfacing using various input devices such as a keyboard, a mouse, a digitizer, a touch panel, and the like.

Among these, the touch panel is a device which is installed at a display surface of a display panel to form a touchable display apparatus (referred to as a touch screen) and allows a user to select desired information while viewing an image, thus being simply manipulated, not malfunctioning often, being able to input even without using a separate input device, and having convenience in which a user can promptly and easily manipulate through content displayed on the screen.

Recently, a foldable display device which reflects a soft electronics trend has been gaining much attention. Particularly, a consumer demand for a foldable display device which simultaneously has flexibility (bendability) and durability has been sharply increasing. US2014065326A1 discloses a foldable display device including a flexible display panel and a cover window on an outside of the flexible display panel. US2014353874A1 relates to a cover window and a manufacturing method of the same. US2013130002A1 discloses a window panel for a display device and a display device includeing the same. WO2013108957A1 discloses a transparent multi-layered film for protecting a display panel which is manufactured by bonding a transparent polyurethane film having the thickness of 20 - 300/mum and a low-elongation film having the elongation of 1 - 180% and the thickness of 20 - 300/mum with a bonding layer, and adhering a release sheet to an adhesive layer. CN102736136A discloses that an optical film includes a polymer material body, a first compo-site film layer, a second composite film layer and a first coating structure.

### [Disclosure]

### [Technical Problem]

One aspect of the present invention provides a window cover having an improved structure to simultaneously secure flexibility and durability and a display apparatus having the same.

Another aspect of the present invention provides a window cover having an improved structure to prevent inner parts from being corroded due to gas or moisture and a display apparatus having the same.

Still another aspect of the present invention provides a window cover having an improved structure to manufacture a thin film and a display apparatus having the same.

Yet another aspect of the present invention provides a method of manufacturing a display apparatus which is capable of reducing cracks or curls that may occur in a manufacturing process.

### [Technical Solution]

To solve the problems, the solutions according to the appended claims are provided. The examples not covered by the appended set of claims do not constitute part of the invention but facilitate the understanding of the invention.

### [Advantageous Effects]

A window cover including a first protective layer and a second protective layer having an asymmetrical structure is applied to a display apparatus, thereby simultaneously securing flexibility and durability.

The window cover is manufactured with a transparent plastic material, thereby implementing a bendable display apparatus.

A blocking layer is formed at the window cover, thereby preventing moisture or gas from permeating into an inner portion of the display apparatus.

A chemical mechanical polishing (CMP) process is used to adjust thicknesses of the first protective layer and the second protective layer of the window cover, thereby reducing cracks or curls that may occur in a process of manufacturing the window cover.

### [Description of Drawings]

These and/or other aspects of the disclosure will become apparent and more readily appreciated from the following description of the embodiments, taken in conjunction with the accompanying drawings of which:
FIG. 1 is an exemplary view of a display apparatus according to an embodiment of the present invention.
FIG. 2 is another exemplary view of a display apparatus according to an embodiment of the present invention.
FIG. 3 is a configuration diagram of a display apparatus according to an embodiment of the present invention.
FIGS. 4A and 4B are cross-sectional views illustrating a structure in which a direct type backlight unit is applied to a display apparatus according to an embodiment of the present invention.
FIGS. 5A and 5B are cross-sectional views illustrating a structure in which an edge type backlight unit is applied to a display apparatus according to an embodiment of the present invention.
FIG. 6 is an exemplary view illustrating a touch panel according to a first embodiment, in the display apparatus according to an embodiment of the present invention.
FIG. 7 is a cross-sectional view illustrating a first pattern unit provided in the touch panel according to the first embodiment of FIG. 6.
FIG. 8 is a cross-sectional view illustrating a second pattern unit provided in the touch panel according to the first embodiment of FIG. 6.
FIG. 9 is a cross-sectional view illustrating a structure in which a touch panel according to a second embodiment is applied to the display apparatus according to an embodiment of the present invention.
FIG. 10 is a cross-sectional view illustrating a structure in which a touch panel according to a third embodiment is applied to the display apparatus according to an embodiment of the present invention.
FIG. 11 is a cross-sectional view illustrating a window cover according to a first embodiment, in the display apparatus according to an embodiment of the present invention.
FIG. 12 is a view illustrating a bent state of the window cover according to the first embodiment, in the display apparatus according to an embodiment of the present invention.
FIG. 13 is a graph showing flexural characteristics of the window cover according to the first embodiment in accordance with a thickness ratio between a first protective layer and a second protective layer of the window cover according to the first embodiment, in the display apparatus according to an embodiment of the present invention.
FIG. 14 is a graph showing relations between a thickness of the first protective layer and a radius of curvature and hardness of the window cover according to the first embodiment, in the window cover according to the first embodiment of FIG. 11.
FIG. 15 is a graph showing relations between a thickness of the second protective layer and a radius of curvature and hardness of the window cover according to the first embodiment, in the window cover according to the first embodiment of FIG. 11.
FIG. 16 is a graph showing a relation between a thickness of a base layer and the hardness of the window cover according to the first embodiment, in the window cover according to the first embodiment of FIG. 11.
FIG. 17 is a cross-sectional view illustrating a window cover according to a second embodiment, in the display apparatus according to an embodiment of the present invention.
FIG. 18 is a flow chart showing a process of manufacturing the window cover of the display apparatus according to an embodiment of the present invention.
FIG. 19 is a view schematically illustrating a manufacturing apparatus for manufacturing the window cover of the display apparatus according to an example useful for understanding the invention.

### [Mode for Invention]

Reference will now be made in detail to embodiments of the disclosure, examples of which are illustrated in the accompanying drawings, wherein like reference numerals refer to like elements throughout. Meanwhile, terms such as "front end", "rear end", "upper", "lower", "upper end" and "lower end" which will be used in the below description are defined based on the drawings, and a shape and a position of each element are not limited by the terms.

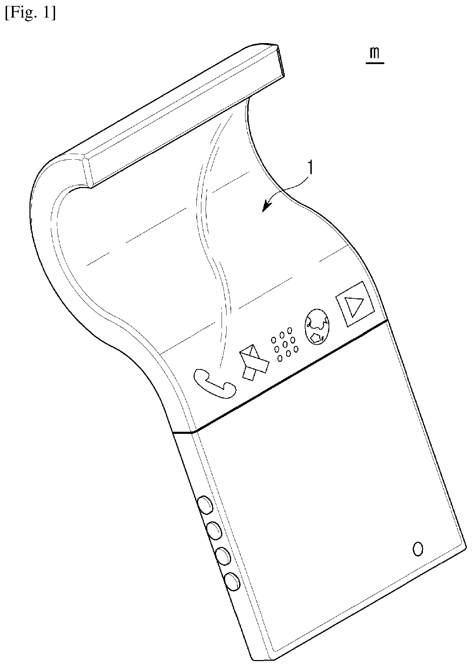

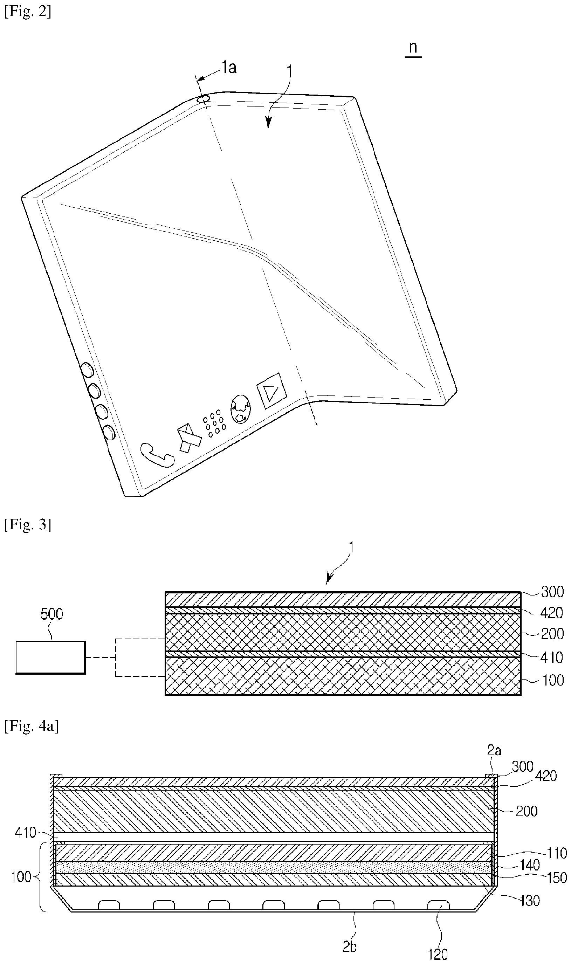

FIG. 1 is an exemplary view of a display apparatus according to an embodiment of the present invention, and FIG. 2 is another exemplary view of a display apparatus according to an embodiment of the present invention.

When a person's hand or an object touches a screen, a display apparatus having a touch panel recognizes a touch position and a position change and checks a gesture corresponding to the position change, checks an operation command corresponding to the touch position or an operation command corresponding to the gesture, performs a function corresponding to the checked operation command, and displays an image related to the function performed.

As illustrated in FIGS. 1 and 2, the display apparatus may have flexibility. That is, the display apparatus may be formed of a foldable material, and include a display unit capable of displaying an image. The display apparatus may be folded along at least one virtual folding line 1a (refer to FIG. 2). In addition, the display apparatus may be bent or curled (refer to FIG. 1.). Thus, the display apparatus having flexibility may be easily stored and carried. Also, since the display apparatus having flexibility may display an image while folded, bent, or curled, various screen configurations are possible. Moreover, since various design attempts which were difficult to implement in a conventional rigid display apparatus are possible, the display apparatus having flexibility may have excellent usability in many fields.

As illustrated in FIGS. 1 and 2, the display apparatus may be implemented as display units of mobile devices (m,n) such as a smartphone, a tablet, and a laptop.

In addition, the display apparatus may be implemented as a monitor of a television and a PC, and may be implemented as guide display devices in a bus station, a subway station, and a department store. However, an application range of the display apparatus having flexibility is not limited to the above examples.

FIG. 3 is a block diagram of a display apparatus according to an embodiment of the present invention.

As illustrated in FIG. 3, a display apparatus 1 may include a display panel 100. The display panel 100 may display an image such as a character, a figure, a photo, etc.

The display panel 100 may include at least one display panel among a liquid crystal display (LCD) panel, an electroluminescence display (ELD) panel, a field emission display (FED) panel, a plasma display panel (PDP), a thin film transistor liquid crystal display (TFT-LCD), and an organic light-emitting diode (OLED) display panel.

The display apparatus 1 may further include a touch panel 200.

The touch panel 200 may be disposed adjacent to the display panel 100. When touched by a user, the touch panel 200 may output a touch signal. The touch panel 200 will be described in detail below.

The display apparatus 1 may further include a window cover 300.

The window cover 300 may be disposed to face the display panel 100 while having the touch panel 200 therebetween. The window cover 300 may be formed on a surface of the display apparatus 1 to be directly or indirectly touched by the user. When described in different terms, the window cover 300 may be used in the display apparatus 1 having the display panel 100.

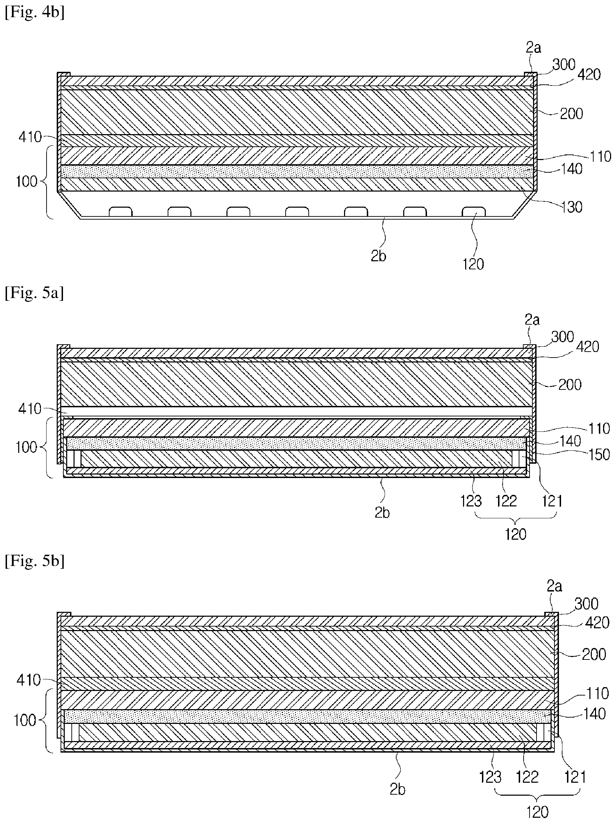

The display panel 100, the touch panel 200, and the window cover 300 may have a stacked structure. The display panel 100 may be disposed below the touch panel 200, and the window cover 300 may be disposed above the touch panel 200. In other words, the display panel 100 may be disposed at an upstream side in a direction in which light emitted from a backlight unit 120 (refer to FIGS. 4A and 4B) of the display panel 100 moves. The window cover 300 may be disposed at a lower flow side in the direction in which the light emitted from the backlight unit 120 (refer to FIGS. 4A and 4B) of the display panel 100 moves. The touch panel 200 may be disposed between the display panel 100 and the window cover 300.

The window cover 300 may be integrally bent with the display panel 100 and the touch panel 200. The window cover 300 will be described in detail below.

The display apparatus 1 may further include a first gap portion 410 formed between the display panel 100 and the touch panel 200 and a second gap portion 420 formed between the touch panel 200 and the window cover 300.

The first gap portion 410 may be formed with an air gap, or an optical clear adhesive (OCA) may be formed therein.

The second gap portion 420 may have the optical clear adhesive (OCA) formed therein.

Here, the OCA may be formed from an adhesive composition which includes an adhesive resin such as an acrylic-based resin, a silicon-based resin, a styrene-based resin, a polyester-based resin, a rubber-based resin, or a urethane-based resin solely or in a mixture of two or more thereof.

The display apparatus 1 may further include a drive module 500 to check a position of a touch point based on a touch signal output from the touch panel 200, check an icon displayed at the checked position of the touch point, control the display apparatus 1 to perform a function corresponding to the checked icon, and control the display apparatus 1 such that a result of performing the function is displayed on the display panel 100.

The drive module 500 may also check a gesture performed on the touch panel 200 based on a position change of a touch point, check an operation command corresponding to the checked gesture, and control an operation of the display panel 100.

Furthermore, an image such as a character, a figure, a photo, etc. displayed on the display panel 100 has display position information.

An inner structure of the display apparatus 1 may be different in accordance with a type of a backlight unit for transmitting light to the display panel 100.

FIGS. 4A and 4B are cross-sectional views illustrating a structure in which a direct type backlight unit is applied to a display apparatus according to an embodiment of the present invention. Hereinafter, a liquid crystal display (LCD) device will be exemplarily described.

As illustrated in FIG. 4A, the display apparatus 1 may include the display panel 100, the touch panel 200, and the window cover 300 disposed within an outer bezel 2a for forming an exterior.

The first gap portion 410 formed between the display panel 100 and the touch panel 200 and the second gap portion 420 formed between the touch panel 200 and the window cover 300 may be provided within the outer bezel 2a.

The first gap portion 410 may be formed with an air gap. The second gap portion 420 may include the optical clear adhesive (OCA) provided therein.

The first gap portion 410 between the display panel 100 and the touch panel 200 may be maintained at a predetermined distance by an inner bezel 150.

Specifically, the display panel 100 may include a liquid crystal panel 110, the backlight unit 120, a diffusion plate 130, and an optical sheet 140.

The liquid crystal panel 110 corresponds to an image formation panel which adjusts the transmittance of light passing through a liquid crystal layer to form an image such as a character, a number, a random icon, etc. Since the liquid crystal panel 110 cannot emit light from the liquid crystal itself, an image is shown by adjusting a transmitted amount and color of light emitted from the backlight unit 120.

The backlight unit 120 is disposed at a rear surface of the liquid crystal panel 110 and serves to emit light to the liquid crystal panel 110. The backlight unit 120 is a light source device which emits light at a back surface of the liquid crystal panel 110 and is a direct type LED light source device.

The backlight unit 120 may include a plurality of light sources (not shown) to emit light using power supplied from an optical drive unit (not shown), and the plurality of light sources may include a light-emitting diode (LED) to generate light with high efficiency and low power.

The diffusion plate 130 serves to increase light of the backlight unit 120 and uniformly maintain brightness of a whole surface. The diffusion plate 130 may be positioned between the liquid crystal panel 110 and the backlight unit 120. The diffusion plate 130 is a semitransparent panel which diffuses light emitted from the backlight unit 120 along a surface to allow color and brightness to be uniformly shown throughout a screen, and improves luminance, etc. of light emitted from the backlight unit 120 to supply the light to the display panel 100.

The optical sheet 140 may be disposed between the liquid crystal panel 110 and the diffusion plate 130. The optical sheet 140 serves to protect the display panel 100 from an external impact.

The optical sheet 140 decreases the luminance of red (R) and green (G) and increases the luminance of blue (B) in light incident on the liquid crystal panel 110 in order to improve optical characteristics.

The display panel 100 may further include an electromagnetic wave shielding layer for shielding electromagnetic waves in order to prevent electromagnetic waves incident on the display panel 100 from being emitted to the outside.

The display panel 100 may further include an infrared ray shielding layer for shielding infrared rays emitted from the display panel 100 in order to prevent infrared rays equal to or higher than a reference level from being emitted to the outside such that signals transmitted using infrared rays such as a remote control are normally transmitted.

The display panel 100 may further include the inner bezel 150 disposed at side edges of the liquid crystal panel 110, the optical sheet 140, and the diffusion plate 130 to fix and cover the liquid crystal panel 110, the optical sheet 140, and the diffusion plate 130.

The inner bezel 150 may be coupled to a frame 2b at which the backlight unit 120 is disposed. Also, the inner bezel 150 may be coupled to the outer bezel 2a. The inner bezel 150 allows the display panel 100 and the touch panel 200 to remain a predetermined interval apart.

Various types of printed circuit boards, input and output devices etc. may be mounted on the frame 2b.

The frame 2b may be formed of a metal with excellent heat dissipation and strength.

The drive module 500 for operating the liquid crystal panel 110, the backlight unit 120, and the touch panel 200 may be disposed in the frame 2b.

As illustrated in FIG. 4B, the display apparatus 1 may include the display panel 100, the touch panel 200, and the window cover 300 disposed within the outer bezel 2a for forming the exterior.

The first gap portion 410 formed between the display panel 100 and the touch panel 200, and the second gap portion 420 formed between the touch panel 200 and the window cover 300 may be provided within the outer bezel 2a.

The optical clear adhesive (OCA) fills the first gap portion 410 and the second gap portion 420.

Since the display panel 100 having the direct type backlight unit 120 is the same as the display panel 100 of FIG. 4A, the description thereof will be omitted.

FIGS. 5A and 5B are cross-sectional views illustrating a structure in which an edge type backlight unit is applied to a display apparatus according to an embodiment of the present invention. Hereinafter, a liquid crystal display (LCD) device will be exemplarily described.

As illustrated in FIG. 5A, the display apparatus 1 may include the display panel 100, the touch panel 200, and the window cover 300 disposed within the outer bezel 2a for forming the exterior.

The first gap portion 410 formed between the display panel 100 and the touch panel 200, and the second gap portion 420 formed between the touch panel 200 and the window cover 300 may be provided within the outer bezel 2a.

The first gap portion 410 may be formed with an air gap. The second gap portion 420 may include the optical clear adhesive (OCA) provided therein.

The first gap portion 410 between the display panel 100 and the touch panel 200 may be maintained at a predetermined distance by the inner bezel 150.

Specifically, the display panel 100 may include the liquid crystal panel 110, the backlight unit 120, and the optical sheet 140.

The liquid crystal panel 110 corresponds to an image formation panel which adjusts the transmittance of light passing through a liquid crystal layer to form an image such as a character, a number, a random icon, etc.

The backlight unit 120 is disposed at a rear surface of the liquid crystal panel 110 and serves to emit light to the liquid crystal panel 110. The backlight unit 120 is a light source device for emitting light from a side surface of the liquid crystal panel 110, and is an edge type LED light source device.

The backlight unit 120 may include a plurality of optical modules 121, a light guide plate 122 disposed between the plurality of optical modules 121, and a reflective sheet 123.

The plurality of optical modules 121 may include a light-emitting diode (LED) to generate light with high efficiency and low power.

The light guide plate 122 serves to guide incident light to the liquid crystal panel 110. The light guide plate 122 may have a transmission material capable of transmitting light. The material of the light guide plate 122 may include a plastic. As an example, the material of the light guide plate 122 may include at least one of polymethyl methacrylate (PMMA) and a polycarbonate (PC). The light guide plate 122 may be formed as a flat type.

The light guide plate 122 has superior transparent, weatherproofing, and tinting characteristics, thus inducing diffusion of light when the light is transmitted.

The reflective sheet 123 is disposed between the light guide plate 122 and the frame 2b, and reflects light provided from the light guide plate 122 to a side surface or a front surface of the light guide plate 122.

The optical sheet 140 may be disposed between the liquid crystal panel 110 and the light guide plate 122. The optical sheet 140 uniformizes the luminance of light output from the light guide plate 122. Also, the optical sheet 140 improves optical characteristics using diffusion or a method of condensing high-luminance light, and then provides the light to the liquid crystal panel 110. Also, the optical sheet 140 decreases the luminance of red (R) and green (G) and increases the luminance of blue (B) to improve the optical characteristics.

The optical sheet 140 is a sheet disposed between the display panel 100 and the backlight unit 120, and may include a prism sheet on which a prism is formed, and a dual brightness enhancement film (DBEF) by a multilayered birefringent coating.

The display panel 100 may further include the frame 2b. The frame 2b may accommodate the backlight unit 120 and the optical sheet 140.

The display panel 100 may further include the inner bezel 150. The inner bezel 150 may accommodate the liquid crystal panel 110 and may be coupled to the frame 2b. The inner bezel 150 may be coupled to the outer bezel 2a.

Various types of printed circuit boards, input and output devices etc. may be mounted on the frame 2b.

The frame 2b may be formed of a metal with excellent heat dissipation and strength.

The drive module 500 for operating the liquid crystal panel 110, the backlight unit 120, and the touch panel 200 may be disposed in the frame 2b.

As illustrated in FIG. 5B, the display apparatus 1 may include the display panel 100, the touch panel 200, and the window cover 300 disposed within the outer bezel 2a for forming the exterior.

The first gap portion 410 formed between the display panel 100 and the touch panel 200, and the second gap portion 420 formed between the touch panel 200 and the window cover 300 may be provided within the outer bezel 2a.

The optical clear adhesive (OCA) fills the first gap portion 410 and the second gap portion 420.

Since the display panel 100 having the edge type backlight unit 120 is the same as the display panel 100 of FIG. 5A, the description thereof will be omitted.

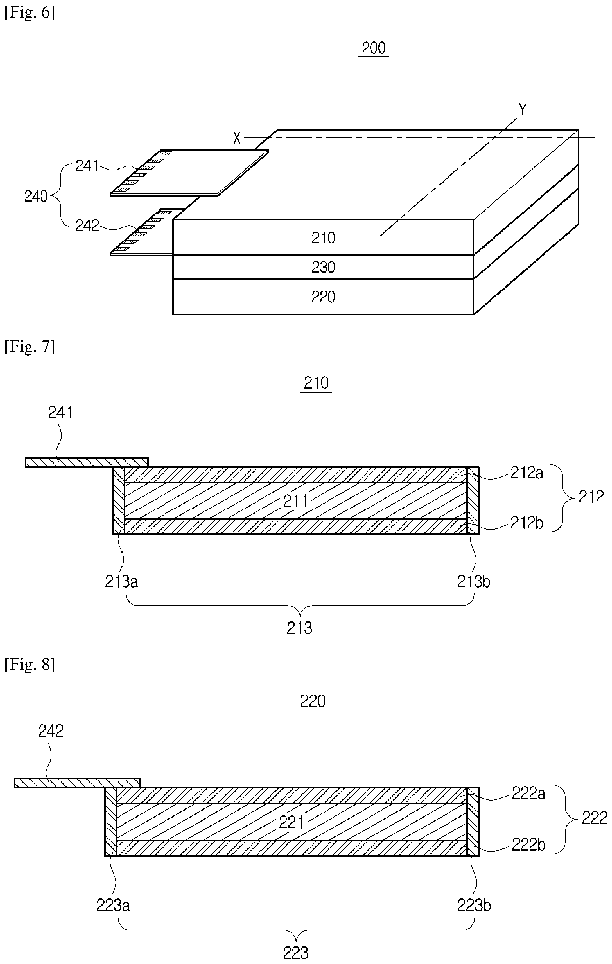

FIG. 6 is an exemplary view illustrating a touch panel according to a first embodiment, in the display apparatus according to an embodiment of the present invention.

As illustrated in FIG. 6, the touch panel 200 according to the first embodiment may include a first pattern unit 210, a second pattern unit 220, and an insulation unit 230.

The first pattern unit 210 may include a plurality of first electrodes. The plurality of first electrodes may be disposed to be spaced apart at regular intervals in a first direction X.

The first pattern unit 210 receives a signal transmitted from the external drive module 500.

The second pattern unit 220 may include a plurality of second electrodes. The plurality of second electrodes may be disposed to be spaced apart at regular intervals in a second direction Y.

The second pattern unit 220 outputs a signal to the external drive module 500.

One electrode among the plurality of first electrodes and the plurality of second electrodes is a driving electrode to which predetermined voltage is applied, and another electrode among the plurality of first electrodes and the plurality of second electrodes is a sensing electrode which outputs a voltage signal in response to a touch.

The first direction X and the second direction Y are directions crossing each other.

The insulation unit 230 may have a transparent material. The insulation unit 230 may be disposed between the first pattern unit 210 and the second pattern unit 220. The insulation unit 230 allows the second pattern unit 220 to be adhered to the first pattern unit 210, and insulates the first pattern unit 210 and the second pattern unit 220.

The insulation unit 230 may include an adhesive. The adhesive may include at least one of an acrylic-based resin, a silicon-based resin, a styrene-based resin, a polyester-based resin, a rubber-based resin, a urethane-based resin, an isocyanate-based resin, a polyvinyl alcohol-based resin, a gelatin-based resin, and a vinyl polymer-based resin.

The adhering method may be performed by a method of applying an adhesive on a surface of one of the first pattern unit 210 and the second pattern unit 220, adhering the other one of the first pattern unit 210 and the second pattern unit 220, and drying.

The applying method is a flexible method which may use, a Mayer bar, an air knife, a gravure, a reverse roll, a kiss-roll, a spray, a blade, a die coater, casting, and spin coating.

The touch panel 200 may further include a wiring unit 240 to apply a signal of predetermined voltage to the plurality of first electrodes and sense a changed voltage of the signal at the plurality of second electrodes.

The wiring unit 240 may include a first wiring unit 241 and a second wiring unit 242.

The first wiring unit 241 is connected to the first pattern unit 210. The first wiring unit 241 serves to receive a voltage signal transmitted from the drive module 500 and transmit the input voltage signal to the first pattern unit 210.

The second wiring unit 242 is connected to the second pattern unit 220. The second wiring unit 242 serves to receive a sensed voltage signal and transmit the received voltage signal to the drive module 500.

Each of the first wiring unit 241 and the second wiring unit 242 may include a flexible printed circuit board (FPCB).

Materials of the first wiring unit 241 and the second wiring unit 242 may include a material with superior electrical conductivity. Specifically, the materials of the first wiring unit 241 and the second wiring unit 242 may include an Ag paste, a material composed of organic Ag, a conductive polymer, carbon black (including CNT), a metal oxide, or a metal. As an example of the metal, Al, AINd, Mo, MoTi, Cu, CuOx, Cr, etc. may be included.

A method of forming the first wiring unit 241 and the second wiring unit 242 may include screen printing, gravure printing, or inkjet printing, etc.

FIG. 7 is a cross-sectional view illustrating a first pattern unit provided in the touch panel according to the first embodiment of FIG. 6, and FIG. 8 is a cross-sectional view illustrating a second pattern unit provided in the touch panel according to the first embodiment of FIG. 6.

As illustrated in FIG. 7, the first pattern unit 210 may include a first film unit 211 and a first electrode unit 212 having a plurality of first electrodes disposed at the first film unit 211.

The first film unit 211 may be formed of a material having bearing power and transparency.

The material of the first film unit 211 may include a plastic film such as polyethylene terephthalate (PET), polycarbonate (PC), polymethyl methacrylate (PMMA), polyethylene naphthalate (PEN), polyether sulfone (PES), a cyclic olefin copolymer (COC), a triacetyl cellulose (TAC) film, a polyvinyl alcohol (PVA) film, a polyimide (PI) film, a polystyrene (PS), and a K-resin containing biaxially oriented PS (BOPS) film.

The plurality of first electrodes of the first electrode unit 212 may include a plurality of first one surface electrodes 212a and a plurality of first back surface electrodes 212b.

The plurality of first one surface electrodes 212a may be disposed in a first direction at one surface of the first film unit 211. The plurality of first back surface electrodes 212b may be disposed in the first direction at a back surface of the first film unit 211.

The plurality of first one surface electrodes 212a and the plurality of first back surface electrodes 212b may be disposed to face each other.

The back surface of the first film unit 211 may face the one surface of the first film unit 211.

The first wiring unit 241 may be connected to at least one of the plurality of first one surface electrodes 212a and the plurality of first back surface electrodes 212b.

The first pattern unit 210 may further include a first connection unit 213 to connect the plurality of first one surface electrodes 212a and the plurality of first back surface electrodes 212b.

The first connection unit 213 may include a first one end connection unit 213a and a first other end connection unit 213b.

The first one end connection unit 213a may be disposed at a first side surface of the first film unit 211 to connect one end of the plurality of first one surface electrodes 212a to one end of the plurality of first back surface electrodes 212b.

The first other end connection unit 213b may be disposed at a second side surface of the first film unit 211 to connect the other end of the plurality of first one surface electrodes 212a to the other end of the plurality of first back surface electrodes 212b.

The first side surface and the second side surface may face each other.

The first wiring unit 241 may be connected to either the first one end connection unit 213a or the first other end connection unit 213b.

As illustrated in FIG. 8, the second pattern unit 220 may include a second film unit 221 and a second electrode unit 222 having a plurality of second electrodes disposed at the second film unit 221.

The second film unit 221 may be formed of a material having bearing power and transparency.

The material of the second film unit 221 may include a plastic film such as polyethylene terephthalate (PET), polycarbonate (PC), polymethyl methacrylate (PMMA), polyethylene naphthalate (PEN), polyether sulfone (PES), a cyclic olefin copolymer (COC), a triacetyl cellulose (TAC) film, a polyvinyl alcohol (PVA) film, a polyimide (PI) film, a polystyrene (PS), and a K-resin containing biaxially oriented PS (BOPS) film.

The plurality of second electrodes of the second electrode unit 222 may include a plurality of second one surface electrodes 222a and a plurality of second back surface electrodes 222b.

The plurality of second one surface electrodes 222a may be disposed in a second direction at one surface of the second film unit 221. The plurality of second back surface electrodes 222b may be disposed in the second direction at a back surface of the second film unit 221.

The plurality of second one surface electrodes 222a and the plurality of second back surface electrodes 222b may be disposed to face each other.

The back surface of the second film unit 221 may face the one surface of the second film unit 221.

The second wiring unit 242 may be connected to at least one of the plurality of second one surface electrodes 222a and the plurality of second back surface electrodes 222b.

The second pattern unit 220 may further include a second connection unit 223 to connect the plurality of second one surface electrodes 222a and the plurality of second back surface electrodes 222b.

The second connection unit 223 may include a second one end connection unit 223a and a second other end connection unit 223b.

The second one end connection unit 223a may be disposed at a first side surface of the second film unit 221 to connect one end of the plurality of second one surface electrodes 222a to one end of the plurality of second back surface electrodes 222b.

The second other end connection unit 223b may be disposed at a second side surface of the second film unit 221 to connect the other end of the plurality of second one surface electrodes 222a to the other end of the plurality of second back surface electrodes 222b.

The first side surface and the second side surface may face each other.

The second wiring unit 242 may be connected to either the second one end connection unit 223a or the second other end connection unit 223b.

The first direction in which the plurality of first electrodes of the first electrode unit 212 are disposed and the second direction in which the plurality of second electrodes of the second electrode unit 222 are disposed are directions crossing each other. That is, the plurality of first electrodes of the first electrode unit 212 and the plurality of second electrodes of the second electrode unit 222 may be disposed to cross each other. However, an arrangement structure of the plurality of first electrodes of the first electrode unit 212 and the plurality of second electrodes of the second electrode unit 222 is not limited to the above example.

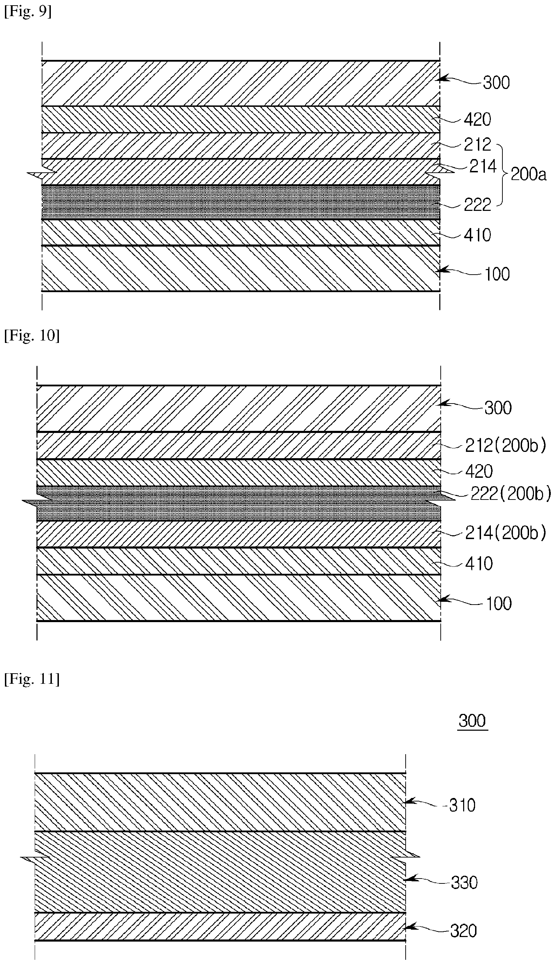

FIG. 9 is a cross-sectional view illustrating a structure in which a touch panel according to a second embodiment is applied to the display apparatus according to an embodiment of the present invention.

As illustrated in FIG. 9, a touch panel 200a according to the second embodiment may include a film unit 214, a first electrode unit 212, and a second electrode unit 222.

The film unit 214 may be formed of a material having bearing power and transparency.

The material of the film unit 214 may include a plastic film such as polyethylene terephthalate (PET), polycarbonate (PC), polymethyl methacrylate (PMMA), polyethylene naphthalate (PEN), polyether sulfone (PES), a cyclic olefin copolymer (COC), a triacetyl cellulose (TAC) film, a polyvinyl alcohol (PVA) film, a polyimide (PI) film, a polystyrene (PS), and a K-resin containing biaxially oriented PS (BOPS) film.

The first electrode unit 212 may be disposed on the film unit 214. Specifically, the first electrode unit 212 may be disposed on the film unit 214 to be adjacent to the window cover 300.

The first electrode unit 212 may include a plurality of first electrodes.

The second electrode unit 222 may be disposed on the film unit 214. Specifically, the second electrode unit 222 may be disposed on the film unit 214 to be adjacent to the display panel 100.

The second electrode unit 222 may include a plurality of second electrodes.

The first electrode unit 212 and the second electrode unit 222 may be disposed to face each other while having the film unit 214 therebetween.

The plurality of first electrodes and the plurality of second electrodes may have a transparent material. Specifically, the plurality of first electrodes and the plurality of second electrodes may include at least one material of indium tin oxide (ITO), a metal material, and a carbon material. As one example, the metal material may include an Ag nanowire (AgNW), a metal mesh, etc. As one example, the carbon material may include a carbon nanotube (CNT), graphene, etc.

The window cover 300, the touch panel 200a according to the second embodiment, and the display panel 100 may have a stacked structure. The display panel 100 may be disposed below the touch panel 200a, and the window cover 300 may be disposed above the touch panel 200a. In other words, the display panel 100 may be disposed at an upstream side in a direction in which light emitted from the backlight unit 120 (refer to FIGS. 4A and 4B) of the display panel 100 moves. The window cover 300 may be disposed at a downstream side in the direction in which the light emitted from the backlight unit 120 (refer to FIGS. 4A and 4B) of the display panel 100 moves. The touch panel 200a may be disposed between the display panel 100 and the window cover 300.

The first gap portion 410 may be formed between the display panel 100 and the touch panel 200a. Specifically, the first gap portion 410 may be formed between the display panel 100 and the second electrode unit 222.

The second gap portion 420 may be formed between the window cover 300 and the touch panel 200a. Specifically, the second gap portion 420 may be formed between the window cover 300 and the first electrode unit 212.

At least one of the first gap portion 410 and the second gap portion 420 may be filled with the optical clear adhesive (OCA).

Here, the OCA may be formed from an adhesive composition which includes an adhesive resin such as an acrylic-based resin, a silicon-based resin, a styrene-based resin, a polyester-based resin, a rubber-based resin, or a urethane-based resin solely or in a mixture of two or more thereof.

The window cover 300 may be integrally bent with the display panel 100 and the touch panel 200a. The window cover 300 will be described in detail below.

Since the display panel 100 is the same as that described in FIGS. 4A to 5B, the description thereof will be omitted.

FIG. 10 is a cross-sectional view illustrating a structure in which a touch panel according to a third embodiment is applied to the display apparatus according to an embodiment of the present invention.

As illustrated in FIG. 10, a touch panel 200b according to the third embodiment may include the film unit 214, the first electrode unit 212, and the second electrode unit 222.

The film unit 214 may be disposed adjacent to the display panel 100.

The film unit 214 may be formed of a material having bearing power and transparency.

The material of the film unit 214 may include a plastic film such as polyethylene terephthalate (PET), polycarbonate (PC), polymethyl methacrylate (PMMA), polyethylene naphthalate (PEN), polyether sulfone (PES), a cyclic olefin copolymer (COC), a triacetyl cellulose (TAC) film, a polyvinyl alcohol (PVA) film, a polyimide (PI) film, a polystyrene (PS), and a K-resin containing biaxially oriented PS (BOPS) film.

The first electrode unit 212 may be disposed on the window cover 300. Specifically, the first electrode unit 212 may be disposed on a back surface of the window cover 300.

The first electrode unit 212 may include a plurality of first electrodes.

The second electrode unit 222 may be disposed between the first electrode unit 212 is and the film unit 214. In other words, the second electrode unit 222 may be disposed on the film unit 214 so as to face the first electrode unit 212.

The second electrode unit 222 may include a plurality of second electrodes.

The plurality of first electrodes and the plurality of second electrodes may have a transparent material. Specifically, the plurality of first electrodes and the plurality of second electrodes may include at least one material of indium tin oxide (ITO), a metal material, and a carbon material. As one example, the metal material may include an Ag nanowire (AgNW), a metal mesh, etc. As one example, the carbon material may include a carbon nanotube (CNT), graphene, etc.

The window cover 300, the touch panel 200b according to the third embodiment, and the display panel 100 may have a stacked structure. The display panel 100 may be disposed below the touch panel 200b, and the window cover 300 may be disposed above the touch panel 200b. In other words, the display panel 100 may be disposed at an upstream side in a direction in which light emitted from the backlight unit 120 (refer to FIGS. 4A and 4A) of the display panel 100 moves. The window cover 300 may be disposed at a downstream side in the direction in which the light emitted from the backlight unit 120 (refer to FIGS. 4A and 4B) of the display panel 100 moves. The touch panel 200b may be disposed between the display panel 100 and the window cover 300.

The first gap portion 410 may be formed between the display panel 100 and the touch panel 200b. Specifically, the first gap portion 410 may be formed between the display panel 100 and the film unit 214.

The second gap portion 420 may be formed in the touch panel 200b. Specifically, the second gap portion 420 may be formed between the first electrode unit 212 and the second electrode unit 222.

At least one of the first gap portion 410 and the second gap portion 420 may be filled with the optical clear adhesive (OCA).

Here, the OCA may be formed from an adhesive composition which includes an adhesive resin such as an acrylic-based resin, a silicon-based resin, a styrene-based resin, a polyester-based resin, a rubber-based resin, or a urethane-based resin solely or in a mixture of two or more thereof.

The window cover 300 may be integrally bent with the display panel 100 and the touch panel 200b. The window cover 300 will be described in detail below.

Since the display panel 100 is the same as that described in FIGS. 4A to 5B, the description thereof will be omitted.

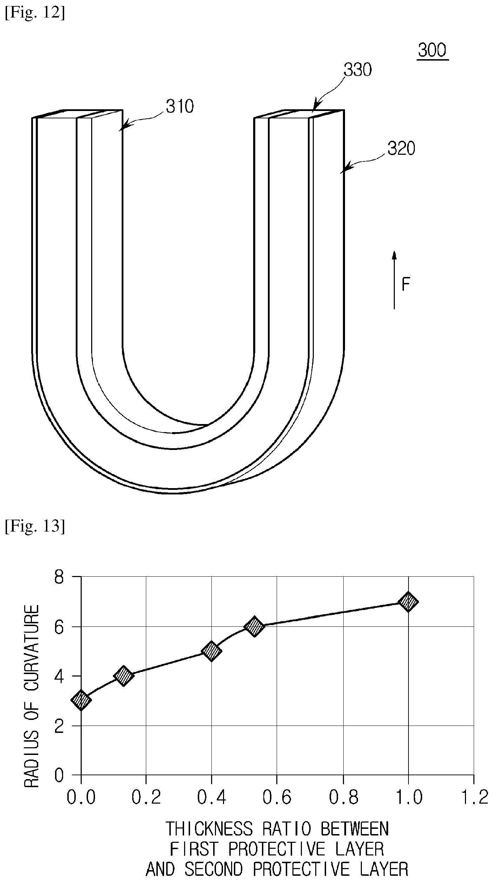

FIG. 11 is a cross-sectional view illustrating a window cover according to a first embodiment, in the display apparatus according to an embodiment of the present invention, and FIG. 12 is a view illustrating a bent state of the window cover according to the first embodiment, in the display apparatus according to an embodiment of the present invention. Hereinafter, FIGS. 1 to 10 will be referenced for reference numerals which are not shown. Hereinafter, a first portion of the window cover 300 is used as a means which encompasses a first protective layer 310. Also, a second portion of the window cover 300 is used as a means which encompasses a second protective layer 320. Hereinafter, the bending direction is used to mean the same as a bending direction F.

As illustrated in FIGS. 11 and 12, the window cover 300 in accordance with the claimed invention includes a base layer 330 the first protective layer 310, and the second protective layer 320.

The first protective layer 310 is disposed on the base layer 330.

The second protective layer 320 is disposed to face the first protective layer 310 while having the base layer 330 therebetween. That is, the base layer 330 is disposed between the first protective layer 310 and the second protective layer 320.

When described in different terms, the first protective layer 310 is positioned at an inside thereof in the bending direction F of the display apparatus 1. The second protective layer 320 is positioned at an outside thereof in the bending direction F. The base layer 330 is positioned between the first protective layer 310 and the second protective layer 320. Specifically, the first protective layer 310 is disposed on the base layer 330 to be positioned at an inside of the base layer 330 in the bending direction F of the display apparatus 1. The second protective layer 320 is disposed on the base layer 330 to be positioned at an outside of the base layer 330 in the bending direction F of the display apparatus 1. The base layer 330 is disposed between the first protective layer 310 and the second protective layer 320.

The first protective layer 310, the base layer 330, and the second protective layer 320 have a stacked structure.

The first protective layer 310 may form a surface of the window cover 300 to be pressed by a user. The first protective layer 310 may have scratch resistance to prevent scratches that may occur in the pressing process.

The second protective layer 320 may be disposed on the touch panel 200. The second protective layer 320 prevents a phenomenon in which the window cover 300 is pressed by a strong external impact.

The first protective layer 310 and the second protective layer 320 have different physical properties. Specifically, the first protective layer 310 and the second protective layer 320 have different stiffnesses. Here, stiffness refers to the degree of rigidity of an object.

As one example of the different physical properties, the first protective layer 310 and the second protective layer 320 have different thicknesses. The thicknesses of the first protective layer 310 and the second protective layer 320 may affect the flexibility or bendability of the window cover 300. The thicknesses of the first protective layer 310 and the second protective layer 320 will be described in detail below.

As another example of the different physical properties, the first protective layer 310 and the second protective layer 320 are formed of different materials. Specifically, the second protective layer 320 may be formed of a material with a greater tensile strength than the first protective layer 310. As described above, the window cover 300 may be bent such that the first protective layer 310 is positioned at the inside of the base layer 330 in the bending direction F of the display apparatus 1, and the second protective layer 320 is positioned at the outside of the base layer 330 in the bending direction F of the display apparatus 1. Here, a compressive stress may act on the first protective layer 310, and a tensile stress may act on the second protective layer 320. Generally, since the tensile stress is smaller than the compressive stress, the second protective layer 320 positioned at the outside of the base layer 330 in the bending direction F of the display apparatus 1 may be damaged when the window cover 300 is bent. Thus, the second protective layer 320 may be formed of a material with a greater tensile strength than the first protective layer 310 to prevent a phenomenon in which the second protective layer 320 is damaged in a process of bending the window cover 300.

As still another example of the different physical properties, a Young's modulus of the first protective layer 310 may be greater than a Young's modulus of the second protective layer 320. The Young's modulus is proportional to the stiffness of an object. Accordingly, the stiffness of the first protective layer 310 is greater than the stiffness of the second protective layer 320. As described above, when the window cover 300 is bent such that the first protective layer 310 is positioned at the inside of the base layer 330 in the bending direction F of the display apparatus 1, and the second protective layer 320 is positioned at the outside of the base layer 330 in the bending direction F of the display apparatus 1, the compressive stress may act on the first protective layer 310, and the tensile stress may act on the second protective layer 320. Here, if the stiffness of the second protective layer 320 is greater than the stiffness of the first protective layer 310, it is difficult for a sufficient tensile stress for bending the display apparatus 1 to act on the second protective layer 320. Thus, it may be difficult to bend the display apparatus 1.

In accordance with the claimed invention, the stiffness of the first protective layer 310 is greater than the stiffness of the second protective layer 320. Accordingly, the thickness of the first protective layer 310 is thicker than the thickness of the second protective layer 320. Correspondingly, the Young's modulus of the first protective layer 310 may be greater than the Young's modulus of the second protective layer 320. The thicknesses of the first protective layer 310 and the second protective layer 320 will be described in detail below.

The window cover 300 may be bent such that the first protective layer 310 has a smaller radius of curvature than the second protective layer 320. As illustrated in FIG. 12, a radius of curvature of the first protective layer 310 positioned at the inside of the base layer 330 may be smaller than a radius of curvature of the second protective layer 320 positioned at the outside of the base layer 330. However, it is not limited thereto, and the first protective layer 310 and the second protective layer 320 may have the same radius of curvature.

The window cover 300 may be bent to have a radius of curvature of 5 mm or less. Specifically, the window cover 300 may be bent such that the first protective layer 310 has the radius of curvature of 5 mm or less.

The window cover 300 may have a pencil hardness of 9H. That is, at least one of the base layer 330, the first protective layer 310, and the second protective layer 320 may have the pencil hardness of 9H. The window cover 300 may also have a pencil hardness greater than 9H.

In an example useful for understanding the invention, the window cover 300 may be formed of a plastic material. Specifically, the window cover 300 may be formed of a transparent plastic material.

The material of the base layer 330 consists of a plastic. Specifically, the material of the base layer 330 may include at least one of polymethyl methacrylate (PMMA), a polycarbonate (PC), polyethylene terephthalate (PET), polyethylene naphthalate (PEN), and a colorless polyimide (CPI).

A hard coating may be added to the base layer 330.

Materials of the first protective layer 310 and the second protective layer 320 may include an acrylic-based resin. Preferably, the first protective layer 310 and the second protective layer 320 may include an organic-inorganic hybrid type acrylic-based resin.

The first protective layer 310 and the second protective layer 320 may be formed at an upper portion and a lower portion, respectively, of the base layer 330 by various coating methods such as a dipping method, a spray method, a slot die method, a gravure method, etc

The first protective layer 310 and the second protective layer 320 may have high hardness.

FIG. 13 is a graph showing flexural characteristics of the window cover according to the first embodiment in accordance with a thickness ratio between a first protective layer and a second protective layer of the window cover according to the first embodiment, in the display apparatus according to an embodiment of the present invention. Hereinafter, FIGS. 11 and 12 will be referenced for reference numerals which are not shown.

As illustrated in FIG. 13, a ratio of the thickness of the second protective layer 320 with respect to the thickness of the first protective layer 310 may be 0.4 or less. Specifically, when the ratio of the thickness of the second protective layer 320 with respect to the thickness of the first protective layer 310 is 0.4, the radius of curvature of the window cover 300 is 5 mm. Also, when the ratio of the thickness of the second protective layer 320 with respect to the thickness of the first protective layer 310 is less than 0.4, the radius of curvature of the window cover 300 is less than 5 mm When the thicknesses of the first protective layer 310 and the second protective layer 320 are the same, i.e. when a ratio between the thickness of the first protective layer 310 and the thickness of the second protective layer 320 is 1, the radius of curvature of the window cover 300 is 7 mm. In other words, when the first protective layer 310 and the second protective layer 320 have a symmetrical structure in terms of the thickness with respect to the base layer 330, it is difficult to obtain a desired radius of curvature (5 mm or less) of the window cover 300.

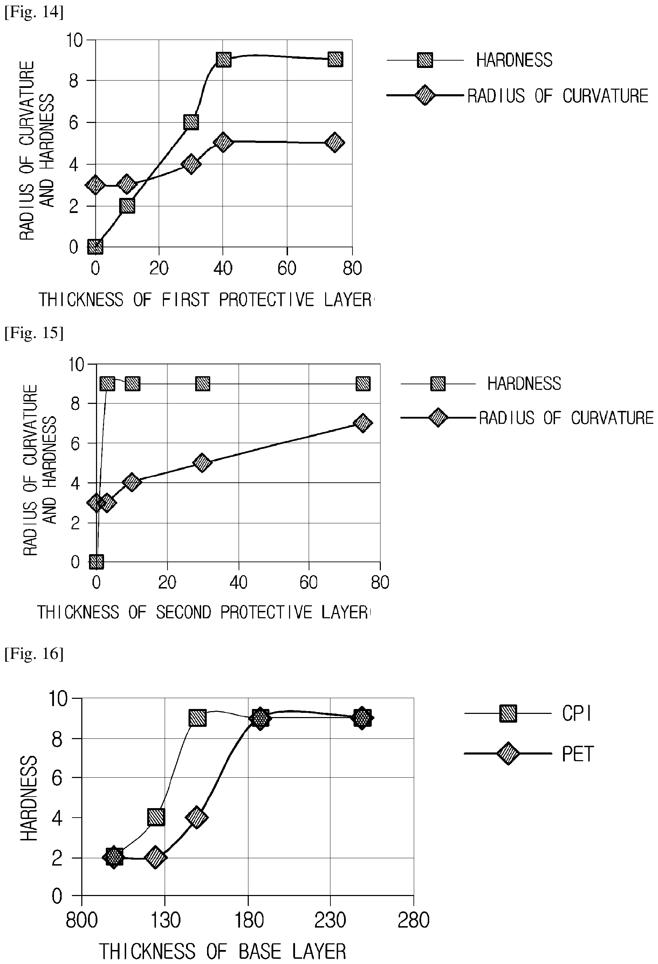

FIG. 14 is a graph showing relations between a thickness of the first protective layer and a radius of curvature and hardness of the window cover according to the first embodiment, in the window cover according to the first embodiment of FIG. 11, and FIG. 15 is a graph showing relations between a thickness of the second protective layer and a radius of curvature and hardness of the window cover according to the first embodiment, in the window cover according to the first embodiment of FIG. 11. FIG. 16 is a graph showing a relation between a thickness of a base layer and the hardness of the window cover according to the first embodiment, in the window cover according to the first embodiment of FIG. 11. Hereinafter, FIGS. 11 and 12 will be referenced for reference numerals which are not shown.

As illustrated in FIGS. 14 to 16, the base layer 330, the first protective layer 310, and the second protective layer 320 may have predetermined thicknesses.

The thicknesses of the first protective layer 310 and the second protective layer 320 are different from each other. Specifically, the thickness of the first protective layer 310 is thicker than the thickness of the second protective layer 320.

The thickness of the base layer 330 is thicker than the thickness of the first protective layer 310 and the second protective layer 320.

As illustrated in FIG. 14, the first protective layer 310 may have a thickness in a range of 40 µm to 75 µm. Specifically, when the first protective layer 310 has the thickness in the range of 40 µm to 75 µm, desired values of the pencil hardness and the radius of curvature of the first protective layer 310 may be simultaneously satisfied. A desired value of the pencil hardness of the first protective layer 310 is 9H or greater. The desired value of the radius of curvature of the first protective layer 310 is 5 mm or less.

As illustrated in FIG. 15, the second protective layer 320 may have a thickness of 30 µm or less. Specifically, when the second protective layer 320 has the thickness of 30 µm or less, desired values of the pencil hardness and the radius of curvature of the second protective layer 320 may be simultaneously satisfied. A desired value of the pencil hardness of the second protective layer 320 is 9H or greater. The desired value of the radius of curvature of the second protective layer 320 is 5 mm or less.

As illustrated in FIG. 16, the base layer 330 may have a thickness in a range of 150 µm to 190 µm. Specifically, when the base layer 330 has the thickness in the range of 150 µm to 190 µm, a desired value of the pencil hardness of the base layer 330 may be satisfied. A desired value of the pencil hardness of the base layer 330 is 9H or greater. Specifically, when the base layer 330 has a colorless polyimide (CPI) material, the base layer 330 is able to satisfy the desired value of the pencil hardness if the thickness of the base layer 330 is in the range of 150 µm to 190 µm. When the base layer 330 has a polyethylene terephthalate (PET) material, a decrease in the pencil hardness may occur if the thickness of the base layer 330 is less than 190 µm, and the window cover 300 may be damaged due to repetitive bending if the thickness of the base layer 330 exceeds 190 µm.

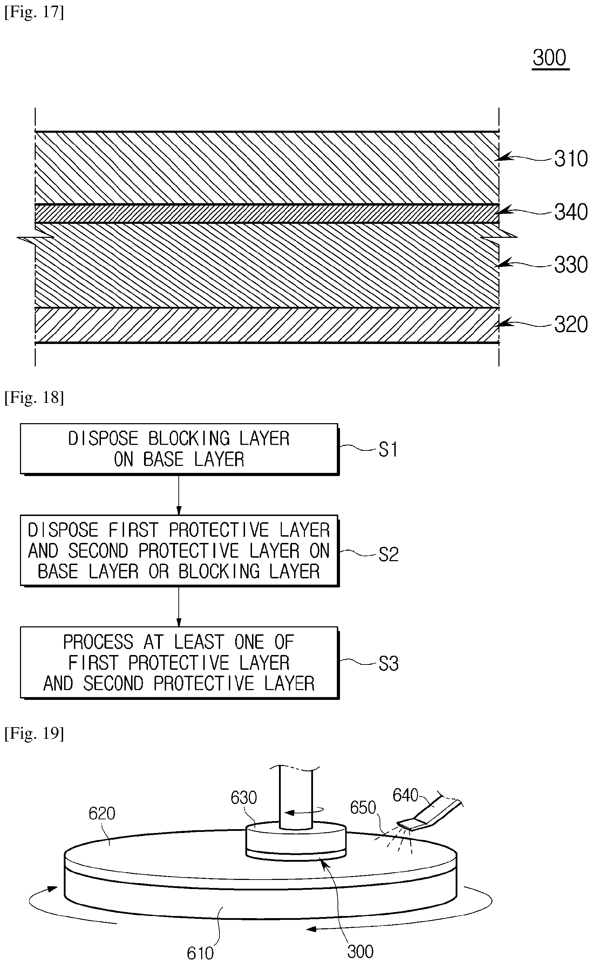

FIG. 17 is a cross-sectional view illustrating a window cover according to a second embodiment, in the display apparatus according to an embodiment of the present invention. Hereinafter, FIGS. 11 and 12 will be referenced for reference numerals which are not shown. Also, overlapping descriptions with FIGS. 11 to 16 will be omitted.

As illustrated in FIG. 17, the window cover 300 may further include a blocking layer 340. That is, the window cover 300 may include the base layer 330, the first protective layer 310, the second protective layer 320, and the blocking layer 340.

The blocking layer 340 may be disposed on the base layer 330 to face at least one of the first protective layer 310 and the second protective layer 320. The blocking layer 340 serves to prevent moisture or gas from being introduced into the display apparatus 1. In other words, the blocking layer 340 blocks the moisture or gas introduced through the window cover 300, thereby preventing a decrease in durability of at least one of the plurality of first electrodes and the plurality of second electrodes provided in the touch panels 200, 200a, and 200b.

A material of the blocking layer 340 may include at least one of silica and alumina.

The blocking layer 340 may be deposited on the base layer 330. As one example, the blocking layer 340 may be formed on the base layer 330 using a sputter deposition method.

In a case of the window cover 300 with the blocking layer 340 disposed on the base layer 330, a moisture permeation rate was measured to be about 40 times lower than in a case of the window cover 300 without the blocking layer 340 disposed on the base layer 330. Specifically, in the case of the window cover 300 with the blocking layer 340 disposed on the base layer 330, a moisture permeation rate of 0.14 g/day·m2 was measured. In the case of the window cover 300 without the blocking layer 340 disposed on the base layer 330, a moisture permeation rate of 6 g/day·m2 was measured.

In addition, it was confirmed that the window cover 300 with the blocking layer 340 disposed on the base layer 330 and the window cover 300 without the blocking layer 340 disposed on the base layer 330 have the same pencil hardness.

FIG. 18 is a flow chart showing a process of manufacturing the window cover of the display apparatus according to an embodiment of the present invention, and FIG. 19 is a view schematically illustrating a manufacturing apparatus for manufacturing the window cover of the display apparatus in accordance with an example useful for understanding the invention. Hereinafter FIGS. 11, 12, and 17 will be referenced for reference numerals which are not shown. Hereinafter, processing may be used as a meaning encompassing slimming.

As illustrated in FIGS. 18 and 19, a method of manufacturing the display apparatus 1 including the window cover 300 having the base layer 330 may include forming the first protective layer 310 and the second protective layer 320 to face each other while having the base layer 330 therebetween (S2), and processing at least one of the first protective layer 310 and the second protective layer 320 such that the first protective layer 310 and the second protective layer 320 have different thicknesses (S3).

In the initial phase of the manufacturing, the first protective layer 310 and the second protective layer 320 may be respectively disposed on both surfaces of the base layer 330 in the same thicknesses.

The first protective layer 310 or the second protective layer 320 may be processed by a chemical mechanical polishing (CMP) process. As described above, the first protective layer 310 and the second protective layer 320 initially, i.e. before reaching the end-product stage, may have different thicknesses. When the second protective layer 320 having a relatively thinner thickness is disposed at one surface of the base layer 330 and the first protective layer 310 having relatively thicker thickness is disposed at the other surface of the base layer 330, crack or curls may occur at the window cover 300. That is, the window cover 300 may curl toward the first protective layer 310 having the relatively thicker thickness. Thus, the CMP process may be used to prevent cracks or curls caused by an asymmetrical structure of the thicknesses of the first protective layer 310 and the second protective layer 320.

A process in which the first protective layer 310 or the second protective layer 320 is slimmed by the CMP process is as follows.

A CMP apparatus may include a rotary plate 610, a polishing pad 620 coupled to an upper portion of the rotary plate 610, a carrier 630 rotating while facing the polishing pad 620, and a slurry feed pipe 640 for feeding a slurry 650. The polishing pad 620 may integrally rotate with the rotary plate 610. The slurry 650 may include an abrasive.

The window cover 300 may be mounted on the carrier 630. Specifically, the window cover 300 may be mounted on the carrier 630 such that the second protective layer 320 to be slimmed faces the polishing pad 620. Here, since initially the first protective layer 310 and the second protective layer 320 of the window cover 300 have the same thicknesses, cracks or curls that are caused by the asymmetrical structure of the thicknesses of the first protective layer 310 and the second protective layer 320 may be prevented. The second protective layer 320 of the window cover 300 may be slimmed in a rotation process of the carrier 630 and the polishing pad 620.

The method of manufacturing the display apparatus 1 including the window cover 300 having the base layer 330 may further include disposing the blocking layer 340 on the base layer 330 to face at least one of the first protective layer 310 and the second protective layer 320 (S1). The blocking layer 340 may be disposed on the base layer 330 before the first protective layer 310 and the second protective layer 320 are disposed on the base layer 330. When blocking layers 340 are respectively disposed at both surfaces of the base layer 330, the first protective layer 310 and the second protective layer 320 may be respectively disposed on the blocking layers 340. When the blocking layer 340 is disposed at one surface of the base layer 330, one of the first protective layer 310 and the second protective layer 320 may be disposed on the blocking layer 340, and the other one of the first protective layer 310 and the second protective layer 320 may be disposed on the base layer 330.

The blocking layer 340 may be deposited on the base layer 330.

## Claims

1. A window cover (300) configured for covering a flexible display apparatus having a display panel to display an image, and configured to be bendable from a flat state to a folded state, wherein in the folded state, the cross-section of the window cover (300) has a U-shape,
**characterized in that** the window cover (300) is formed of a plurality of transparent plastic materials, the window cover comprising:
a base layer (330) consisting of a first plastic material;
a first protective layer (310) consisting of a second plastic material different from the first material, the first protective layer (310) having a first stiffness and being disposed on the base layer to be positioned at an inside of the base layer in a bending direction of the window cover (300); and
a second protective layer (320) disposed on the base layer to be positioned at an outside of the base layer in the bending direction of the window cover (300) and arranged to have a second stiffness less than the first stiffness, the second protective layer (320) consisting of a third plastic material different from the first and second plastic materials,
wherein the thickness of the base layer (330) is arranged to be thicker than the thickness of the first protective layer (310) and the thickness of the second protective layer (320), and the thickness of the first protective layer is arranged to be thicker than the thickness of the second protective layer such that a desired radius of curvature of the window cover (300) can be obtained when the window cover (300) is in the folded state.

2. The window cover according to claim 1, wherein a ratio of the thickness of the second protective layer with respect to the thickness of the first protective layer is 0.4 or less.

3. The window cover according to claim 1, wherein the first protective layer has a thickness in a range of 40 µm to 75 µm.

4. The window cover according to claim 1, wherein the second protective layer has a thickness of 30 µm or less.

5. The window cover according to claim 1, wherein the materials of the first protective layer and the second protective layer comprise an acrylic-based resin.

6. The window cover according to claim 1, wherein the Young's modulus of the first protective layer is arranged to be greater than the Young's modulus of the second protective layer.

7. The window cover according to claim 1, wherein the second protective layer is formed of a material with a greater tensile strength than the first protective layer.

8. The window cover according to claim 1, wherein the material of the base layer is one of polymethyl methacrylate (PMMA), a polycarbonate (PC), polyethylene terephthalate (PET), polyethylene naphthalate (PEN), and a colorless polyimide (CPI).

9. The window cover according to claim 1, wherein the base layer has a thickness in a range of 150 µm to 190 µm.

10. The window cover according to claim 1, wherein at least one among the base layer, the first protective layer, and the second protective layer has a pencil hardness of 9H.

11. The window cover according to claim 1, wherein the window cover further comprises a blocking layer (340) disposed on the base layer to face one of the first protective layer and the second protective layer in order to prevent moisture or gas from being introduced into the flexible display apparatus.

12. The window cover according to claim 11, wherein a material of the blocking layer comprises at least one of silica and alumina.

13. A flexible display apparatus comprising:
a display panel configured to display an image; and
a window cover according to any one of claims 1 to 12.

14. The flexible display apparatus according to claim 13, the flexible display apparatus further comprising:
a touch panel disposed adjacent to the display panel to output a touch signal, wherein the window cover is disposed to face the display panel while having the touch panel therebetween.

15. A method of manufacturing a window cover (300) configured for covering a flexible display apparatus having a display panel to display an image, and configured to be bendable from a flat state to a folded state, wherein in the folded state, the cross-section of the window cover (300) has a U-shape, and the window cover (300) is formed of a plurality of transparent plastic materials, the method comprising:
disposing a first protective layer (310) consisting of a second plastic material and having a first stiffness and a second protective layer (320) consisting of a third plastic material and having a second stiffness less than the first stiffness to face each other while having a base layer (330) consisting of a first plastic material therebetween, and the first, second and third plastic materials are different from each other; and
processing the first protective layer and the second protective layer such that the thickness of the first protective layer is arranged to be thicker than the thickness of the second protective layer, and wherein the thickness of the base layer is arranged to be thicker than the thickness of the first protective layer and the thickness of the second protective layer, such that a desired radius of curvature of the window cover (300) can be obtained when the window cover (300) is in the folded state.

16. The method according to claim 15, wherein at least one of the first protective layer and the second protective layer is processed by a chemical mechanical polishing CMP process.

17. The method according to claim 15, further comprising disposing a blocking layer on the base layer to face at least one of the first protective layer and the second protective layer, before the disposing of the first protective layer and the second protective layer to face each other while having the base layer therebetween.

## Patentansprüche

1. Fensterabdeckung (300), die zum Abdecken einer flexiblen Anzeigevorrichtung mit einer Anzeigetafel zum Anzeigen eines Bildes ausgestaltet ist, und die ausgestaltet ist, um von einem flachen Zustand in einen gefalteten Zustand biegbar zu sein, wobei in dem gefalteten Zustand der Querschnitt der Fensterabdeckung (300) eine U-Form aufweist,
**dadurch gekennzeichnet, dass** die Fensterabdeckung (300) aus einer Mehrzahl von transparenten Kunststoffmaterialien gebildet ist, wobei die Fensterabdeckung Folgendes umfasst:
eine Basisschicht (330), die aus einem ersten Kunststoffmaterial besteht;
eine erste Schutzschicht (310), die aus einem zweiten Kunststoffmaterial besteht, das sich von dem ersten Material unterscheidet, wobei die erste Schutzschicht (310) eine erste Steifigkeit aufweist und auf der Basisschicht angeordnet ist, um an einer Innenseite der Basisschicht in einer Biegerichtung der Fensterabdeckung (300) positioniert zu werden; und
eine zweite Schutzschicht (320), die auf der Basisschicht angeordnet ist, um an einer Außenseite der Basisschicht in der Biegerichtung der Fensterabdeckung (300) positioniert zu werden, und die so eingerichtet ist, dass sie eine zweite Steifigkeit aufweist, die geringer ist als die erste Steifigkeit, wobei die zweite Schutzschicht (320) aus einem dritten Kunststoffmaterial besteht, das sich von den ersten und zweiten Kunststoffmaterialien unterscheidet,
wobei die Dicke der Basisschicht (330) so eingerichtet ist, dass sie dicker ist als die Dicke der ersten Schutzschicht (310) und die Dicke der zweiten Schutzschicht (320), und die Dicke der ersten Schutzschicht so eingerichtet ist, dass sie dicker ist als die Dicke der zweiten Schutzschicht, so dass ein gewünschter Krümmungsradius der Fensterabdeckung (300) erhalten werden kann, wenn sich die Fensterabdeckung (300) in dem gefalteten Zustand befindet.

2. Fensterabdeckung nach Anspruch 1, wobei ein Verhältnis der Dicke der zweiten Schutzschicht in Bezug auf die Dicke der ersten Schutzschicht 0,4 oder weniger beträgt.

3. Fensterabdeckung nach Anspruch 1, wobei die erste Schutzschicht eine Dicke in einem Bereich von 40 µm bis 75 µm aufweist.

4. Fensterabdeckung nach Anspruch 1, wobei die zweite Schutzschicht eine Dicke von 30 µm oder weniger aufweist.

5. Fensterabdeckung nach Anspruch 1, wobei die Materialien der ersten Schutzschicht und der zweiten Schutzschicht ein Harz auf Acrylbasis umfassen.

6. Fensterabdeckung nach Anspruch 1, wobei der Elastizitätsmodul der ersten Schutzschicht so eingerichtet ist, dass er größer ist als der Elastizitätsmodul der zweiten Schutzschicht.

7. Fensterabdeckung nach Anspruch 1, wobei die zweite Schutzschicht aus einem Material mit einer größeren Zugfestigkeit als die erste Schutzschicht gebildet ist.

8. Fensterabdeckung nach Anspruch 1, wobei das Material der Basisschicht eines aus Polymethylmethacrylat (PMMA), einem Polycarbonat (PC), Polyethylenterephthalat (PET), Polyethylennaphthalat (PEN) und einem farblosen Polyimid (CPI) ist.

9. Fensterabdeckung nach Anspruch 1, wobei die Basisschicht eine Dicke in einem Bereich von 150 µm bis 190 µm aufweist.

10. Fensterabdeckung nach Anspruch 1, wobei mindestens eine von der Basisschicht, der ersten Schutzschicht und der zweiten Schutzschicht eine Bleistifthärte von 9H aufweist.

11. Fensterabdeckung nach Anspruch 1, wobei die Fensterabdeckung ferner eine Sperrschicht (340) umfasst, die auf der Basisschicht so angeordnet ist, dass sie einer aus der ersten Schutzschicht und der zweiten Schutzschicht zugewandt ist, um zu verhindern, dass Feuchtigkeit oder Gas in die flexible Anzeigevorrichtung eindringt.

12. Fensterabdeckung nach Anspruch 11, wobei ein Material der Sperrschicht mindestens eines aus Siliziumdioxid und Aluminiumoxid umfasst.

13. Flexible Anzeigevorrichtung, umfassend:
eine Anzeigetafel, die dazu ausgestaltet ist, ein Bild anzuzeigen; und
eine Fensterabdeckung nach einem der Ansprüche 1 bis 12.

14. Flexible Anzeigevorrichtung nach Anspruch 13, wobei die flexible Anzeigevorrichtung ferner Folgendes umfasst:
ein Touchpanel, das angrenzend an die Anzeigetafel angeordnet ist, um ein Berührungssignal auszugeben, wobei die Fensterabdeckung so angeordnet ist, dass sie der Anzeigetafel zugewandt ist, während sich das Touchpanel dazwischen befindet.

15. Verfahren zur Herstellung einer Fensterabdeckung (300), die zum Abdecken einer flexiblen Anzeigevorrichtung mit einer Anzeigetafel zum Anzeigen eines Bildes ausgestaltet ist, und die ausgestaltet ist, um von einem flachen Zustand in einen gefalteten Zustand biegbar zu sein, wobei in dem gefalteten Zustand der Querschnitt der Fensterabdeckung (300) eine U-Form aufweist, und wobei die Fensterabdeckung (300) aus einer Mehrzahl von transparenten Kunststoffmaterialien gebildet ist, wobei das Verfahren Folgendes umfasst:
Anordnen einer ersten Schutzschicht (310), die aus einem zweiten Kunststoffmaterial besteht und eine erste Steifigkeit aufweist, und einer zweiten Schutzschicht (320), die aus einem dritten Kunststoffmaterial besteht und eine zweite Steifigkeit aufweist, die geringer als die erste Steifigkeit ist, sodass sie einander zugewandt sind, während eine Basisschicht (330), die aus einem ersten Kunststoffmaterial besteht, dazwischen angeordnet ist, und wobei das erste, zweite und dritte Kunststoffmaterial voneinander verschieden sind; und
Verarbeiten der ersten Schutzschicht und der zweiten Schutzschicht derart, dass die Dicke der ersten Schutzschicht so eingerichtet ist, dass sie dicker ist als die Dicke der zweiten Schutzschicht, und wobei die Dicke der Basisschicht so eingerichtet ist, dass sie dicker ist als die Dicke der ersten Schutzschicht und die Dicke der zweiten Schutzschicht, sodass ein gewünschter Krümmungsradius der Fensterabdeckung (300) erhalten werden kann, wenn sich die Fensterabdeckung (300) in dem gefalteten Zustand befindet.

16. Verfahren nach Anspruch 15, wobei mindestens eine aus der ersten Schutzschicht und der zweiten Schutzschicht durch ein chemisch-mechanisches Polierverfahren (CMP) verarbeitet wird.

17. Verfahren nach Anspruch 15, ferner umfassend das Anordnen einer Sperrschicht auf der Basisschicht so, dass sie mindestens einer aus der ersten Schutzschicht und der zweiten Schutzschicht zugewandt ist, bevor die erste Schutzschicht und die zweite Schutzschicht so angeordnet werden, dass sie einander zugewandt sind, während sich die Basisschicht dazwischen befindet.

## Revendications

1. Couverture de fenêtre (300) conçue pour couvrir un appareil d'affichage souple ayant un panneau d'affichage pour afficher une image, et conçu pour être fléchissable d'un état plat à un état plié, la section transversale de la couverture de fenêtre (300) étant en forme de U dans l'état plié,
**caractérisée en ce que** la couverture de fenêtre (300) est formée d'une pluralité de matériaux en plastique transparent, la couverture de fenêtre comprenant :
une couche de base (330) se composant d'un premier matériau en plastique ;
une première couche protectrice (310) se composant d'un deuxième matériau en plastique différent du premier matériau, la première couche protectrice (310) ayant une première rigidité et étant disposée sur la couche de base pour être positionnée sur un intérieur de la couche de base dans une direction de flexion de la couverture de fenêtre (300) ; et
une deuxième couche protectrice (320) disposée sur la couche de base pour être positionnée sur un extérieur de la couche de base dans la direction de flexion de la couverture de fenêtre (300) et disposée pour avoir une deuxième rigidité inférieure à la première rigidité, la deuxième couche protectrice (320) se composant d'un troisième matériau en plastique différent des premier et deuxième matériaux en plastique,
l'épaisseur de la couche de base (330) étant agencée pour être plus épaisse que l'épaisseur de la première couche protectrice (310) et que l'épaisseur de la deuxième couche protectrice (320), et l'épaisseur de la première couche protectrice étant agencée pour être plus épaisse que l'épaisseur de la deuxième couche protectrice de telle sorte qu'un rayon de courbure de la couverture de fenêtre (300) souhaité puisse être obtenu lorsque la couverture de fenêtre (300) est dans l'état plié.

2. Couverture de fenêtre selon la revendication 1, un rapport entre l'épaisseur de la deuxième couche protectrice et l'épaisseur de la première couche protectrice étant inférieur ou égal à 0,4.

3. Couverture de fenêtre selon la revendication 1, la première couche protectrice ayant une épaisseur dans la plage de 40 µm à 75 µm.

4. Couverture de fenêtre selon la revendication 1, la deuxième couche protectrice ayant une épaisseur dans la plage de 30 µm ou moins.

5. Couverture de fenêtre selon la revendication 1, les matériaux de la première couche protectrice et de la deuxième couche protectrice comprenant une résine à base d'acrylique.

6. Couverture de fenêtre selon la revendication 1, le module de Young de la première couche protectrice étant conçu pour être supérieur au module de Young de la deuxième couche protectrice.

7. Couverture de fenêtre selon la revendication 1, la deuxième couche protectrice étant formée dans un matériau avec une résistance à la traction supérieure à celle de la première couche protectrice.

8. Couverture de fenêtre selon la revendication 1, le matériau de la couche de base étant un matériau parmi le poly(méthacrylate) de méthyle (PMMA), un polycarbonate (PC) ; le poly(téréphtalate) d'éthylène (PET), le poly(naphtalate) d'éthylène (PEN) et un polyimide incolore (CPI).

9. Couverture de fenêtre selon la revendication 1, la couche de base ayant une épaisseur dans la plage de 150 µm à 190 µm.

10. Couverture de fenêtre selon la revendication 1, au moins une couche parmi la couche de base, la première couche protectrice et la deuxième couche protectrice ayant une dureté de mine de crayon de 9H.

11. Couverture de fenêtre selon la revendication 1, la couverture de fenêtre comprenant en outre une couche bloquante (340) disposée sur la couche de base pour être orientée vers une couche parmi la première couche protectrice et vers la deuxième couche protectrice afin d'empêcher l'introduction d'humidité ou de gaz dans l'appareil d'affichage souple.

12. Couverture de fenêtre selon la revendication 11, un matériau de la couche bloquante comprenant au moins un matériau parmi la silice et l'alumine.

13. Appareil d'affichage souple comprenant :
un panneau d'affichage conçu pour afficher une image ; et
une couverture de fenêtre selon l'une quelconque des revendications 1 à 12.

14. Appareil d'affichage souple selon la revendication 13, l'appareil d'affichage souple comprenant en outre :
un panneau tactile disposé de façon adjacente au panneau d'affichage pour sortir un signal tactile, la couverture de fenêtre étant disposée pour être orientée vers le panneau d'affichage avec le panneau tactile étant situé entre eux.

15. Procédé de fabrication d'une couverture de fenêtre (300) conçue pour couvrir un appareil d'affichage souple ayant un panneau d'affichage pour afficher une image, et conçu pour être fléchissable d'un état plat à un état plié, la section transversale de la couverture de fenêtre (300) étant en forme de U dans l'état plié, et la couverture de fenêtre (300) étant formée d'une pluralité de matériaux en plastique transparent, le procédé comprenant :
disposer une première couche protectrice (310) se composant d'un deuxième matériau en plastique et ayant une première rigidité et une deuxième couche protectrice (320) se composant d'un troisième matériau en plastique et ayant une deuxième rigidité inférieure à la première rigidité pour qu'elles soient orientées l'une vers l'autre en ayant entre elles une couche de base (330) se composant d'un premier matériau en plastique, et les premier, deuxième et troisième matériaux en plastique étant différents les uns des autres ; et
traiter la première couche protectrice et la deuxième couche protectrice de telle sorte que l'épaisseur de la première couche protectrice est agencée pour être plus épaisse que l'épaisseur de la deuxième couche protectrice, et l'épaisseur de la couche de base étant agencée pour être plus épaisse que l'épaisseur de la première couche protectrice et que l'épaisseur de la deuxième couche protectrice, de telle sorte qu'un rayon de courbure de la couverture de fenêtre (300) souhaité peut être obtenu lorsque la couverture de fenêtre (300) est dans l'état plié.

16. Couverture de fenêtre selon la revendication 15, au moins une couche parmi la première couche protectrice et la deuxième couche protectrice étant traitée avec un processus de polissage mécano-chimique CMP.

17. Procédé selon la revendication 15, comprenant en outre la disposition d'une couche bloquante sur la couche de base, étant orientée vers au moins une couche parmi la première couche protectrice et la deuxième couche protectrice, avant la disposition de la première couche protectrice et de la deuxième couche protectrice de sorte à être orientées l'une vers l'autre, la couche de base étant située entre elles.
